# EUROPÄISCHE PATENTSCHRIFT

(11) **EP 0 401 815 B1**
(45) Veröffentlichungstag und Bekanntmachung des Hinweises auf die Patenterteilung: **27.10.1993**
(21) Anmeldenummer: 90110780.5
(22) Anmeldetag: 07.06.1990
(51) Int. Cl.: G01C 9/24, G01C 15/00

(54) **Wasserwaage**
Spirit level
Niveau à bulle d'air

(30) Priorität: 09.06.1989 DE 8907057 U; 09.06.1989 DE 8907079 U; 09.06.1989 DE 3918865
(43) Veröffentlichungstag der Anmeldung: 12.12.1990
(73) Patentinhaber: LAWA GMBH, D-59423 Unna (DE)
(72) Erfinder: Otto, Hans-Ulrich, D-4750 Unna-Köningsborn (DE)
(74) Vertreter: Herrmann-Trentepohl, Werner, Dipl.-Ing.

(56) Entgegenhaltungen:
- WO-A-88/04405
- CH-A- 663 467
- US-A- 3 897 637

## Beschreibung

Die Erfindung betrifft eine Wasserwaage gemäß dem Oberbegriff des Anspruches 1.

Die erfindungsgemäße Wasserwaage ist ihrem Grundaufbau nach ein Meßinstrument, mit dem die waagerechte bzw. die senkrecht geneigte Lage einer ebenen Fläche geprüft wird. Zu diesem Zweck ist ein Balken verhältnismäßig großer Länge vorgesehen. Das ist erforderlich, um die zu prüfende Fläche auf einer hinreichend großen Unterlage zu erfassen, wenn der Balken mit seiner Aufsetzfläche auf einer waagerecht auszuwiegenden Unterlage aufgesetzt oder eine vertikal aufgehende Anlagefläche senkrecht ausgewogen werden sollen. Zum Auswiegen der erfindungsgemäßen Wasserwaage dienen Libellen, d.h. eine in einem Rohr eingeschlossene Luftblase, welche in einer festgelegten Achse meistens unter einem durch eine Skala aufgeteilten Deckblatt spielt. Die Luftblasen stellen sich gemäß dem Neigungswinkel der zu prüfenden Unterlage ein.

Solche Wasserwaagen werden u.a. dort eingesetzt, wo es darum geht, unabhängig vom Raumsystem bzw. einer vorhandenen Unterlage eine genaue horizontale oder vertikale Bezugslinie zu ermitteln. So wird z.B. beim Tapezieren von Raumwänden, die nicht genau lotrecht zueinander und zum Boden verlaufen vor dem Kleben der ersten Bahn mit Hilfe der Wasserwaage eine genau lotrechte Markierungslinie ermittelt. Auch beim Hochmauern eines Gebäudes werden Mauersteinlagen einzeln auf ihren horizontalen Verlauf überprüft.

Die Erfindung geht von einer vorbekannten Wasserwaage dieser Art aus (Deutsches Gebrauchsmuster 75 04 115). Hierbei ist der Balken als Gehäuse ausgebildet, in den ein Lichtsender zusammen mit einem seiner Stromversorgung dienenden Akkumulator eingebaut ist. Der Lichtsender besteht aus einer Lampe, welche mit einem Schalter in Betrieb genommen werden kann und mit Lichteinfallöffnungen der Libellen zusammenwirkt, um diese unter ungünstigen äußeren Bedingungen zu beleuchten.

Solche und ähnliche Wasserwaagen haben jedoch den Nachteil, daß ihre Längendimension zu kurz ist, um exakt gerade Linien über längere Entfernungen zu erzeugen. Deswegen muß z.B. beim Einmessen der ersten Tapetenbahn die Wasserwaage entlang der Wandhöhe immer wieder angelegt werden. Die gedachte und gewünschte Vertikallinie setzt sich somit aus den Einzellängen der Wasserwaage zusammen, was zwangsläufig zu Fehlern führt.

Soll ein Fußboden plattiert werden, so taucht bei den vorbekannten Wasserwaagen häufig das Problem auf, daß der Fußboden entweder uneben oder aber im Raum geneigt ist. Um eine horizontale Oberfläche der Plattenbelegung zu erreichen, müßte mit einer normalen Wasserwaage diese ebenfalls schrittweise angelegt werden, was aber schon bei kleinen Flächen zu Fehlern führt. Das gleiche gilt für Plattenbele gungen von Wänden, bei denen die Plattenoberkanten in einer bestimmten Wandhöhe eine exakte horizontale Linie bilden sollen.

Im letztgenannten Fall hilft man sich dabei mit sogenannten Schlauchwaagen, die aus einem transparenten, wassergefüllten Schlauch bestehen, welcher U-förmig gebogen ist. Die Minisken der Wassersäulen in den U-Schenkeln liegen gemäß dem Prinzip der kommunizierenden Röhren auf gleichem Niveau. Zur Bedienung solcher Wasserwaagen gehören jedoch stets mindestens zwei Arbeitskräfte. Die eine hält den einen Miniskus auf der gewünschten Höhe. Die andere markiert in der Entfernung davon die Höhe des anderen Miniskus an der Wand. Dann muß gegebenenfalls noch eine Verbindungslinie gezogen werden. Unerwünschte, aber nicht immer vermeidbare Bewegungen der Schlauchwaage führen in diesem Fall zu fehlerhaften Markierungen.

Bekannt ist außerdem eine Wasserwaage, die ebenfalls kurz ausgebildet ist, jedoch einen eingebauten Laserstrahlsender aufweist, der beim Auswiegen einer Unterlage eine Verlängerung in der Horizontalen und in der Vertikalen erlaubt. Allerdings läßt sich diese Wasserwaage nur zusammen mit einem Stativ verwenden, wenn zuverlässige Messungen verlangt werden. Das Stativ hat einen drehbaren Stativkopf, auf dem die Wasserwaage mit Hilfe von in ihrem Balken ausgesparten Nuten befestigt wird. Daraus entsteht ein Nivellier, dessen Einrichtung durch die Verstellung der in den Balken eingebauten Libellen erfolgen muß ( CH-A 663 467). Von dieser Wasserwaage geht die Erfindung aus.

Darüberhinaus sind auch Wasserwaagen bekannt, die allerdings nur zum Messen von Winkel geeignet sind, die eine Unterlage mit der Horizontalen einschliept und die deshalb keine Verlängerungseinrichtung für die Horizontale oder die Vertikale aufweisen ( WO-A 88/04415).

Der Erfindung liegt die Aufgabe zugrunde, eine Wasserwaage der eingangs genannten Art so auszugestalten, daß auf einfache Weise fehlerfreie Messungen auch über größere Enffernungen möglich werden und diese in der Regel auch von einer Person ausgeführt werden können.

Die Erfindung löst diese Aufgabe mit den Merkmalen des Anspruches 1.

Die erfindungsgemäße Wasserwaage läßt sich wie eine vorbekannte Wasserwaage einsetzen, was einleitend beschrieben worden ist. Auf diese Weise können waagerechte bzw. geneigte Flächen auf der Länge des Balkens ausgewogen werden. Bei eingeschaltetem Lasersender kann jedoch der aus der Stirnseite des Gehäuses austretende Laserstrahl als Verlängerung der Anlage- oder Aufsetzfläche dienen, weil er parallel zur Längsrichtung des Balkens verläuft. Infolge des kohärenten Lichtes kann der Laserstrahl selbst oder sein in einiger Enffernung von der neuen Wasserwaage auf einer aufgehenden oder horizontalen Fläche auftreffender Lichtpunkt markiert werden.

Gemäß der Erfindung, weist die neue Wasserwaage einen Winkelmesser auf. Hier durch ist es möglich, außer horizontalen Linien und vertikalen Linien, welche mit dem Winkelmesser und einer der Libellen kontrolliert werden, auch beliebig geneigte Linien mit dem Laserstrahl zu vermessen und zu übertragen. Der Winkelmesser zeigt infolge seiner Befestigung auf dem Gehäuse der neuen Wasserwaage jede Verkippung des Gehäuses nach Winkelgraden in der Meßebene an. Mit ihm können daher auch die Horizontale oder die Vertikale ohne die Libellen oder beliebig geneigte Ebenen oder Linien vermessen bzw. über größere Entfernungen übertragen werden.

Im folgenden wird die Erfindung anhand der Zeichnungen näher erläutert; es zeigen:
Fig. 1 in perspektivischer Darstellung und Ansicht sowie in abgebrochener Wiedergabe eine Wasserwaage gemäß ihrem Grundaufbau nach der Erfindung,
Fig. 2 das Markieren eines Höhenpunktes auf einer aufgehenden Wand bei Verwendung der Wasserwaage nach Fig. 1,
Fig. 3 in der Fig. 1 entsprechender jedoch vereinfachter Darstellung und Ansicht eine Wasserwaage gemäß der Erfindung mit aufgebautem Winkelmesser,
Fig. 4 den unteren Teil des Balkengehäuses mit den aufgebauten Teilen des Lasersenders,
Fig. 5 das Ausloten einer Fliesenlage mit Hilfe der erfindungsgemäßen Wasserwaage,
Fig. 6 das Messen des Neigungswinkels eines Walmdaches,
Fig. 7 das Einmessen eines Höhenpunktes,
Fig. 8 das Einrichten einer Rohrleitung nach Gefälle oder Steigung mit Hilfe der Wasserwaage gemäß der Erfindung,
Fig. 9 das Einmessen einer Gebäudehöhe mit Hilfe einer Wasserwaage gemäß der Erfindung, die auf einem Stativ aufgebaut ist,
Fig. 10 die erfindungsgemäße Wasserwaage gemäß der Ausführungsform nach Fig. 10 als Nivelliergerät,
Fig. 11 das Festlegen einer Höhenlinie im Gelände mit Hilfe der erfindungemäßen Wasserwaage und
Fig. 12 das Auswinkeln eines Gebäudefundamentes in einer Baugrube mit Hilfe der erfindungsgemäßen Wasserwaage, die dazu mit einem Zusatzgerät versehen ist.

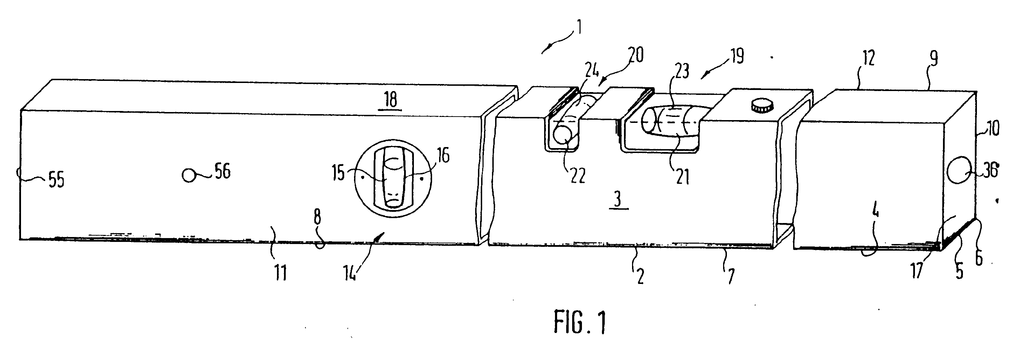

In der Fig. 1 ist die erfindungsgemäße Wasserwaage allgemein mit (1) bezeichnet. Sie weist einen Balken (2) auf, welcher ein im Querschnitt viereckiges, gemäß dem dargestellten Ausführungsbeispiel rechteckiges Gehäuse (3) bildet. Die Unterseite (4) des Gehäuses (3), welche von den unteren Querschnittskante (5) und den anschließenden unteren Längskanten (6 bzw. 7) begrenzt wird, bildet eine zum waagerechten Auswiegen einer Unterlage dienende Aufsetzfläche (8). Die in Fig. 1 in der Zeichenebene liegende benachbarte und aufgehende Gehäusefläche (9), welche von den aufgehenden Kanten (10) und der unteren Längskante (6) sowie der oberen Längskante (12) begrenzt wird, bildet dagegen eine Anlagefläche, die einer aufgehenden Fläche angelegt werden kann. Auf der ihr gegenüberliegenden und ihr parallelen Gehäusefläche (11) befindet sich eine Libelle (14). Sie wird von einer Luftblase (15) in einem Glasrohr (16) gebildet, dessen Achse parallel zur Stirnfläche (17) des Gehäuses (3) verläuft. Auf der der Aufsetzfläche (8) gegenüberliegenden oberen und zu dieser parallelen Fläche (18) befinden sich zwei weitere Libellen (19 bzw. 20), deren Achsen parallel zur Aufsetzfläche (8) verlaufen, jedoch rechtwinklig zueinander orientiert sind. Hierbei handelt es sich ebenfalls um die Längsachsen von Rohren (21, 22), in denen Luftblasen (23, 24) zwischen Eichstrichen spielen.

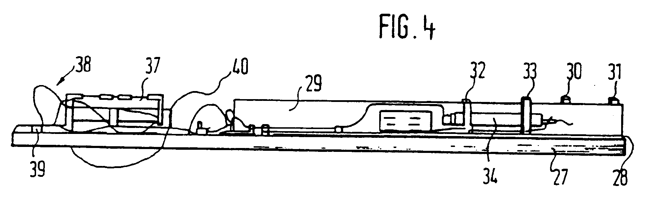

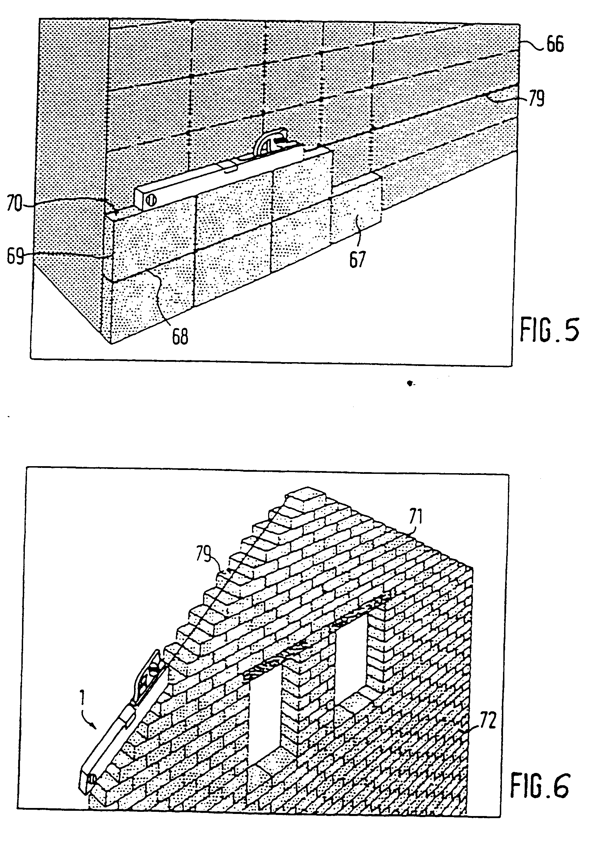

Das Gehäuse besteht aus einem oberen U-förmigen Gehäuseteil (25), mit dem eine Bodenplatte (26) verschraubt ist (Fig. 4), deren Außenseite die Aufsetzfläche (8) bildet. Die Bodenplatte ist ihrerseits U-förmig und weist deswegen Längsschenkel (27) auf, die zur Verschraubung dienen. Der die Längsschenkel (27) verbindende Steg (28) trägt eine lsolierplatte (29), welche mit Hilfe von isolierklemmen (30, 31) auf dem Schenkel (28) der Bodenplatte befestigt ist. Mit Hilfe von isolierten Klemmen (32, 33) ist das rohrförmige Gehäuse (34) eines Lasersenders derart auf der Isolierplatte (29) befestigt, daß beim Einbau in das Gehäuse (3) der Laserstrahl, der bei (35) austritt parallel zur Aufsetz- und Anlagefläche (8 bzw. 9) in Wasserwaagenlängsrichtung durch das Gehäuse (3) verläuft (Fig. 5). Der von dem Lasersender (34) ausgesandte Strahl kohärenten Lichtes tritt an der Stirnseite (17) des Gehäuses (3) durch eine Öffnung (36) aus. Auf dem Schenkel (28) ist ein Satz von stabförmigen Batterien (37) aufgebaut. Die Verdrahtung der Batterien, welche bei (38) dargestellt ist, verläuft zu einer Lüsterklemme (39), die ihrerseits die von den Batterien gebildete elektrische Stromquelle mit einem nicht dargestellten Ein- und Aus schalter verbindet. Die Verdrahtung (39) führt dagegen zu dem Lasersender (34).

In der Ausführungsform nach Fig. 4 ist auf dem Gehäuse (3) ein Winkelmesser (41) abnehmbar als Zubehör befestigt. Der Winkelmesser hat einen beweglichen Balken (42), der mit einem Meßstrich versehen ist, welcher sich über die kreisförmige in Winkelgrade aufgeteilte Skala (43) entsprechend der Neigung des Gehäuses (3) einstellt. Über eine Nonius-Skala (44) läßt sich der exakte Winkel bestimmen.

Der Winkelmesser ist in ein Gehäuse (45) eingebaut, das als Formkörper ausgebildet ist. Dieser Körper weist eine Öse (46) auf, mit der bei aufgesetztem Winkelmesser (41) das Gehäuse (3) gehalten und gekippt werden kann. Er besitzt ferner eine schwalbenschwanzförmige Führung (47) für ein U-Profil (48), welches auf der Oberseite (18) des Gehäuses (3) befestigt ist. Die Öffnung des Gehäuses, die mit (36) bezeichnet ist, und aus der der Laserstrahl austritt, befindet sich unmittelbar am vorderen Ende der Führung (48), wobei die Libelle (14) am hinteren Ende des Gehäuses (3) angeordnet ist. Die weiteren Libellen sind nicht dargestellt.

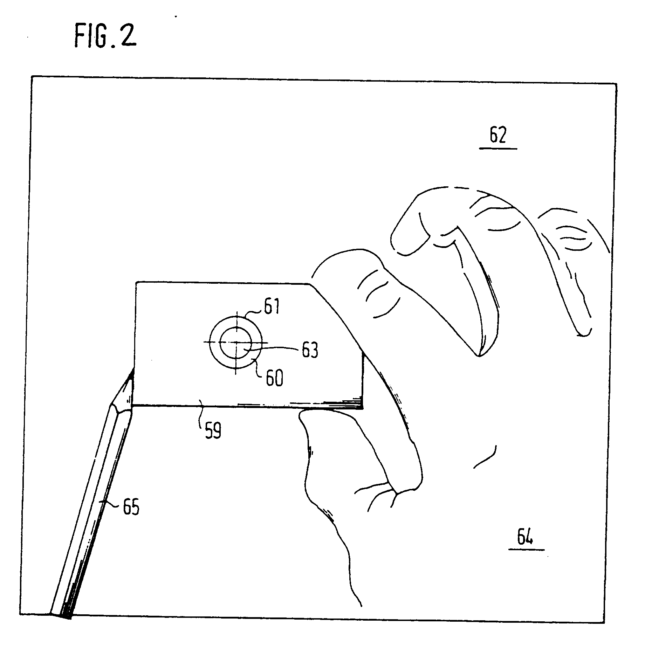

Wenn man mit Hilfe des Laserstrahls eine Höhe einmessen will, benutzt man hierfür zweckmäßig eine Platte (59) (Fig. 2), welche mit einer runden Lochung (60) versehen ist, die mit einem Fadenkreuz (61) überspannt ist. Das Fadenkreuz richtet man auf das Zentrum des von dem Laserstrahl auf der aufgehenden Fläche (62) erscheinenden Lichtpunktes (63) mit der Hand (64) aus. Mit Hilfe eines Stiftes (65) läßt sich dann auf den Lichtpunkt die Anlage- bzw. Auflagefläche (8, 9) übertragen.

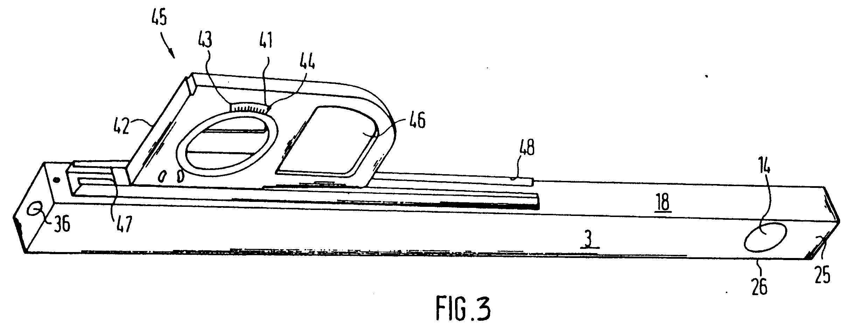

Im Anwendungsfall der Fig. 5 sollen auf einer Wandfläche (66) Fliesen (67) angebracht werden, deren Fugen (68) horizontal verlaufen. Die erfindungsgemäße Wasserwaage gemäß dem Ausführungsbeispiel der Fig. 3 wird auf die von der oberen Fliesenlage (69) gebildete Unterlage (70) mit ihrer Aufsetzfläche aufgelegt. Der Laserstrahl (79) markiert dann die Verlängerung der Unterlage (70), so daß die noch fehlenden Fliesen exakt anhand des Laserstrahles (79) ausgerichtet werden können.

Im Ausführungsbeispiel der Fig. 6 dient die erfindungsgemäße Wasserwaage (1) dagegen zur Festlegung der Walmdachneigung (71) auf einer Giebelwand (72) eines Gebäudes. Der Laserstrahl (79) dient zur Ausrichtung der an den Enden des Mauerwerks im Giebel (72) angeordneten Kunststeine.

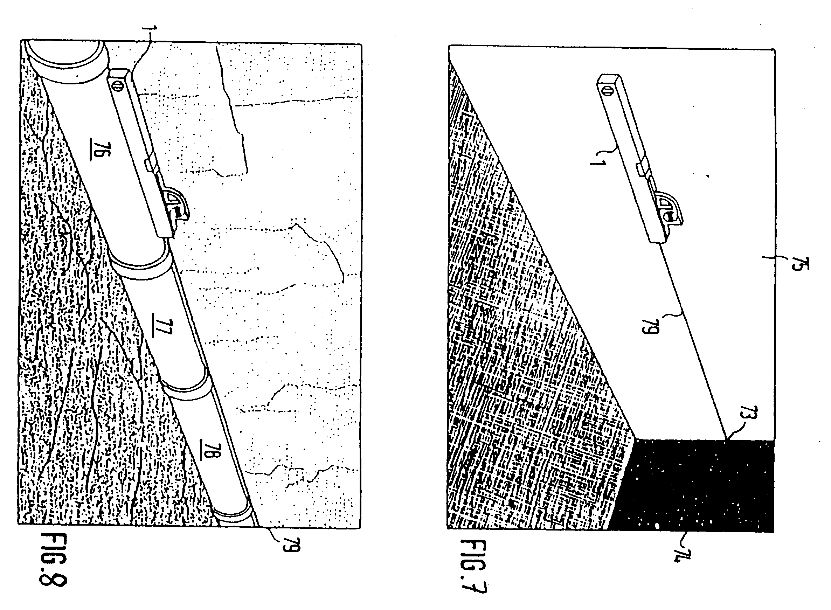

Die Fig. 7 zeigt die Einzelheiten einer Einmessung eines Höhenpunktes (73) auf einer aufgehenden Gebäudewand (74), was mit Hilfe der vorstehend beschriebenen Platte (59) nach Fig. 2 erfolgen kann. Hierbei wird die Wasserwaage (1) mit ihrer Anlagefläche (9) an die anschließende aufgehende Wand (75) angelegt und die Höhe des Laserstrahles (79) eingemessen.

Im Ausführungsbeispiel der Fig. 8 wird eine aus einzelnen und voreinander gebauten Rohren (76 bis 78) bestehende Rohrleitung mit Hilfe der erfindungsgemäßen Wasserwaage (1) in das Gefälle eingerichtet. Dabei liegt das Rohr (76) bereits im richtigen Gefälle. Auf das Rohr (76) wird die erfindungsgemäße Wasserwaage mit ihrer Aufsetzfläche aufgelegt, und die folgenden Rohre (77, 78) werden unter Benutzung des Laserstrahles (79) verlegt.

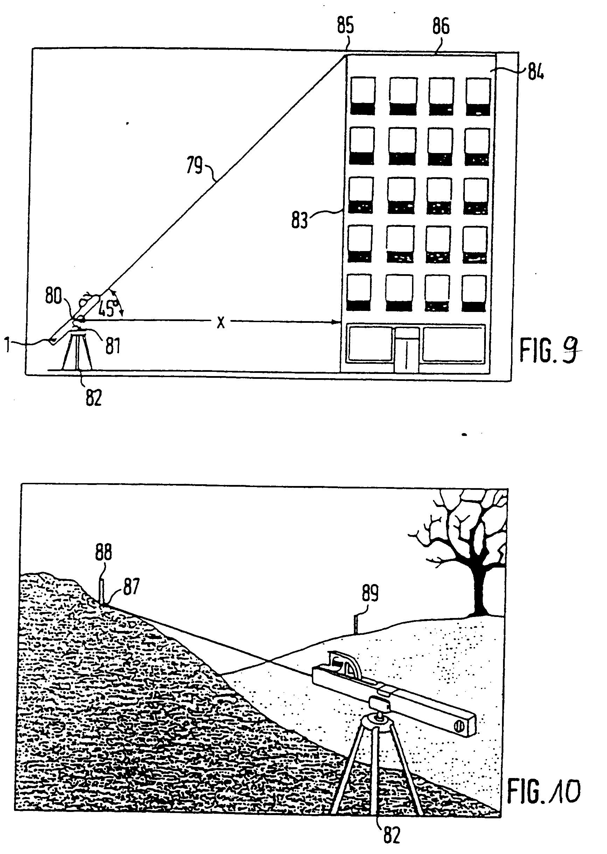

In der Ausführungsform nach Fig. 9 wird über einen Adapter (80) einer Kippeinrichtung (81) eines Stativs (82) die erfindungsgemäße Wasserwaage (1) montiert. Sie läßt sich mit Hilfe der Kippeinrichtung (81) in den dargestellten Winkel von 45 einrichten. Ist die horizontale und mit (x) bezeichnete Entfernung des Adapters (81) von der Wand (83) eines Gebäudes (84) bekannt und trifft der Laserstrahl (79) die Oberkante (85) des Flachdaches (86) des Gebäudes (84), so läßt sich aufgrund einer einfachen Rechenoperation die Höhe des Gebäudes bestimmen.

Im Ausführungsbeispiel der Fig. 10 dient dagegen der Adapter zusammen mit dem Stativ (82) zur Einmessung von Höhenpunkten (87) an Meßlatten (88, 89) im Gelände. Damit ist ein Flächen- bzw. Höhennivellement möglich.

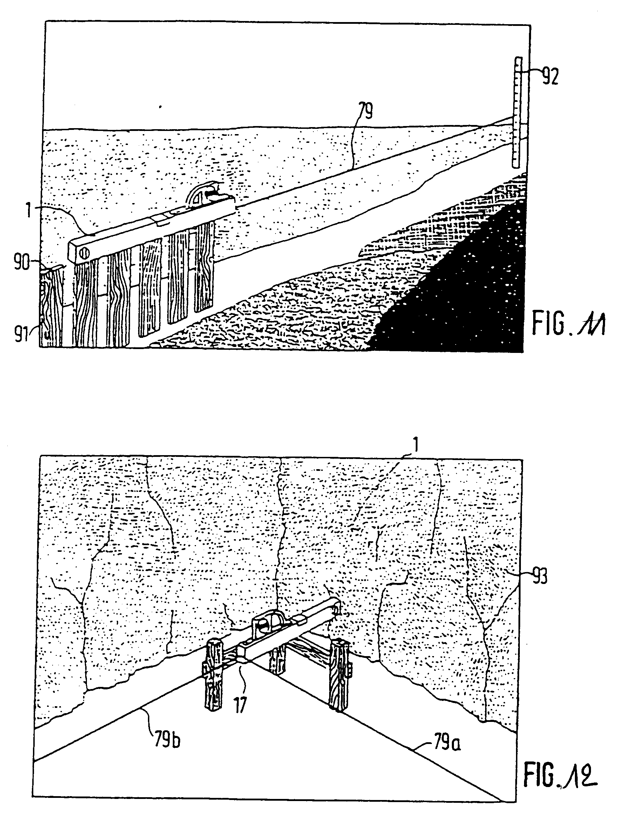

Im Ausführungsbeispiel der Fig. 11 wird dagegen das obere Niveau (90) einer Balkenreihe (91) auf eine Meßlatte (92) übertragen, indem die erfindungsgemäße Wasserwaage (1) auf die Oberseite der Balken (51) aufgelegt wird, so daß der Laserstrahl (79) das Niveau (90) bis zur Meßlatte (92) verlängert. Wenn die richtige Höhe auf der Meßlatte (92) anvisiert ist, liegt das Niveau (90) der Balkenreihe (91) in der gewünschten Höhe.

Im Ausführungsbeispiel der Fig. 12 ist auf der Stirnseite (17) der Wasserwaage (1) ein Penta-Prisma angebracht. Dadurch wird der Laserstrahl (79) in zwei rechtwinklig zueinander stehende Strahlen (79a, 79b) kohärenten Lichtes aufgeteilt. In der Baugrube (93) läßt sich mit Hilfe der Wasserwaage (1) der rechte Winkel einmessen, den die benachbarten, aufgehenden Gebäudewände einzuschließen haben.

## Patentansprüche

1. Wasserwaage (1) in Kombination mit einer Platte (59), die Wasserwaage, bestehend aus einem zum Auswiegen einer Unterlage dienenden Balken (2), der ein Gehäuse (3) bildet, das, eine zum Auswiegen der Unterlage dienende Aufsetzfläche (8), die eine von Quer- und Längskanten (5, 6, 7 ) umschlossene Gehäuseseite (2) ist, und eine benachbarte, anschliepende senkrechte Anlagefläche (9) aufweist, die von aufgehenden Gehäusekanten (10), sowie von oberen und unteren Gehäuselängskanten (6,12) umschlossen und an eine aufgehende Unterlage anlegbar ist, die Wasserwaage ferner bestehend aus Libellen (14, 19 20) mit zur Anlage - bzw. Aufsetzfläche parallelen und zueinander senkrechten Achsen, aus einem eingebauten Laserstrahlsender (34), vorzugsweise mit eingebauter elektrischer Lichtquelle, der so ausgebildet ist, daß dessen Strahl wobei der Laserstrahl parallel zu der Aufsetz- und der Anlagefläche (8, 9) durch eine Öffnung (36) in der Stirnseite des Gehäuses (3) austreten kann, aus einem Formkörper, der einen als Winkelmesser dienenden Balken (42) und eine Öse (46) aufweist, die zum Halten und Kippen des Gehäuses dient, und aus einem auf der Oberseite (18) des Gehäuses (3) befestigtes U-Profil (48) als Führung des Formkörpers, und die Platte (59) ein eine Lochung (60) überspannendes Fadenkreuz (61) aufweisend, wobei zum Einmessen eines Höhenpunktes die Platte so ausgebildet ist, daß die mit dem Fadenkreuz (61) auf einen mit dem Laserstrahl erzeugten Lichtpunkt ausgerichtete Platte die Übertragung der Aufsetz-bzw. Anlagefläche (8, 9) auf den Lichtpunkt ermöglicht.

2. Wasserwaage in Kombination mit einer Platte (59), die Wasserwaage nach Anspruch 1, dadurch gekennzeichnet, daß der Lasersender derart auf einer Isolierplatte (29) befestigt ist, daß bei deren Einbau in das Gehäuse (3) der Laserstrahl parallel zu der Aufsetz- und der Anlagefläche (8, 9) durch die Öffnung (36) in der Stirnseite des Gehäuses austritt.

3. Wasserwaage in Kombination mit einer Platte (59), die Wasserwaage nach einem der Ansprüche 1 oder 2, dadurch gekennzeichnet, daß die Lochung (60) der Platte (59) mit einem Fadenkreuz (61) überspannt ist, dessen Zentrum nach Ausrichtung auf den von dem Laserstrahl auf einer aufgehenden Fläche (62) entworfenen Lichtpunkt zur Übertragung auf die aufgehende Fläche (62) dient.

## Claims

1. Spirit level (1) in combination with a plate (59), said spirit level consisting of a beam (2) serving for weighing out a base, said base forming a case (3) having a putting-on surface (8) serving for weighing out the base, said putting-on surface being a case side (2) surrounded by cross and longitudinal edges (5,6,7) and an adjacent, adjoining vertical lining-up surface (9) which is surrounded by rising case edges (10) as well as by upper and lower case longitudinal edges (6, 12) and which can be lined up to a rising base, the spirit level further consisting of water levels (14, 19, 20), the axes of which are parallel to the lining-up or putting-on surface, respectively, and vertical to each other, of an integrated laser beam transmitter (34), preferably with an integrated electric light source, the transmitter being of such a design that the laser beam thereof can emerge parallel to the putting-on and the lining-up surface (8, 9) through an opening (36) in the face of the case (3), of a formed body having a beam (42) for measuring angles and an eye (46) for holding and tilting the case, and of a channel section (48) mounted on the upper side (18) of the case (3) and serving as a guide of the formed body, and the plate (59) comprising a graticule (61) covering over a hole (60),
wherein for measuring an altitude point the plate is designed in such a way that the plate which has been aligned with the graticule (61) with respect to a light spot generated with the laser beam allows for transmitting the putting-on or lining-up surface to the light spot.

2. Spirit level in combination with a plate according to claim 1,
**characterized in that**
the laser transmitter is mounted on an insulating plate (29) in such a way that if the same is installed into the case (3) the laser beam emerges parallel to the putting-on and lining-up surface (8,9) through the opening (36) in the face of the case.

3. Spirit level in combination with a plate according to any of claims 1 or 2,
**characterized in that**
the hole (60) of the plate (59) is covered over with a graticule (61), the center of which serves for a transmission onto the rising surface (62) after having been aligned with respect to a light spot generated by the laser beam.

## Revendications

1. Niveau à bulle d'air (1) en combinaison avec une plaque (59), le niveau à bulle d'air comprenant une poutre (2) servant à peser un support, la poutre formant un boîtier (3) comprenant une surface de poser (8) servant à peser le support et formée par une côté du boîtier (2) entourèe par des arêtes transversales et longitudinales (5,6,7) et une surface d'appui (9) verticale adjacente entourée par des arêtes du boîtier verticales (10) et par des arêtes du boîtier longitudinales supérieures et inférieures (6,12), la surface d'appui pouvant être mise à un support vertical,
le niveau à bulle d'air de plus comprenant des nivelles (14,19,20) présentant des axes perpendiculaires l'un sur l'autre et parallèles à la surface d'appui ou la surface de poser, un émetteur de rayons de laser (34) encastré, de préference avec une source lumineuse électrique encastrée, l'émetteur étant formé de façon que le rayon de l'émetteur (le rayon laser) peut, parallèlement à la surface de poser et à la surface d'appui (8,9), émerger par une ouverture (36) dans la face frontale du boîtier (3), un corps profilé comprenant une poutre (42) servant de goniomètre et un oeillet (46) servant pour supporter et basculer le boîtier, et un profil en U (48) fixé sur la face supérieure (18) du boîtier (3) et servant de guidage pour le corps profilé,
et la plaque (59) comprenant une croisée de fils (61) recouvrant une perforation (60),
la plaque étant formée, pour le mesure d'un point de hauteur, de façon que la plaque, orientée avec la croisée de fils (61), vers un point lumineux généré par le rayon laser, permet la transmission de la surface de poser ou de la surface d'appui (8,9) sur le point lumineux.

2. Niveau à bulle d'air en combinaison avec une plaque (59) selon la revendication 1, **characteriseé en ce que** l'émetteur laser est fixé sur une plaque isolante (29) de façon que lors de son installation dans le boîtier (3) le rayon laser émerge parallèlement à la surface de poser et à la surface d'appui (8,9) par l'ouverture (36) dans le côté frontal du boîtier.

3. Niveau à bulle d'air en combinaison avec une plaque (59) selon une des revendications 1 ou 2, **characteriseé** **en ce que** la perforation (60) de la plaque (59) est recouverte par une croisée de fils (61), dont le centre sert après orientation sur le point lumineux projeté sur une surface verticale (62) par le rayon laser, à la transmission sur la surface verticale (62).
